# EUROPEAN PATENT APPLICATION

(11) **EP 4 257 367 A1**
(43) Date of publication of application: **11.10.2023**
(21) Application number: 22305505.4
(22) Date of filing: 08.04.2022
(51) Int. Cl.: B42D 1/00, B42D 25/24, B42D 25/405

(54) **HINGE WITH SECURITY ELEMENT FOR SECURE ARTICLE**

(71) Applicant: Thales Dis France SAS, 92190 Meudon (FR)
(72) Inventor: SYRJANEN, Taru, 13600 La Ciotat (FR); LAPPALAINEN, Kristian, 13600 La Ciotat (FR)
(74) Representative: Castelo, Jérôme

(57) **Abstract**

A connection device (1) for connection to a data device (2) and for connecting the data device (2) to a secure article comprises at least one security element (4) that is produced by ultrasonic welding. A data carrier (3) for a secure article comprises such a connection device and at least one data device (2). A secure article comprises or consists of such a data carrier (3).

## Description

### TECHNICAL FIELD

The present invention relates to a connection device for connection to a data device and for connecting the data device to a secure article according to claim 1, to a data carrier for a secure article comprising such a connection device according to claim 6, to a secure article comprising or consisting of such a data carrier according to claim 9, to a method of producing a connection device according to claim 10, and to a method of producing a data carrier for a secure article as claimed in claim 14.

### PRIOR ART

Connection devices such as hinges for connection to a data device such as a data page and for connecting the data device to a secure article such as a passport are an essential part of the durability and security of the data device and the entire secure article, respectively.

It is especially challenging to produce a durable connection device for certain data devices such as polycarbonate datapages. For instance, the connection device must be thin and flexible, but still durable. In the field of passports for example it is not allowed to force the booklet open. The connection device must endure a large number of bendings, pulling, tearing, and be very difficult to separate from the rest of the data device. However, if the connection device is separated, the process ideally visualises the forgery for instance by leaving a mark into the data device.

Connection devices in the form of hinges are today often made of a web-like fabric consisting of synthetic material, in particular of polyester threads, the melting point of which is very high, and therefore the fabric is very difficult to mould. Security elements available for such material are UV fluorescent printing and single coloured threads. These security elements can be easily manipulated, e.g. by removing or modifying a UV fluorescent printing or by removing and then reusing a colored thread in a forged secure article.

### SUMMARY OF THE INVENTION

It is an object of the present invention to overcome the drawbacks of the prior art. In particular, it is an object to provide a connection device for connection to a data device and for connecting the data device to a secure article that provides an increased protection against forgery and that at the same time is easy to manufacture.

This object is achieved with a connection device according to claim 1. In particular, a connection device for connection to a data device and for connecting the data device to a secure article is provided, wherein the connection device comprises at least one security element, and wherein the security element is produced by ultrasonic welding.

Ultrasonic welding is well-known in the art and corresponds to a process that uses mechanical vibrations in the ultrasonic range. These vibrations, produced by a welding sonotrode, as it is generally known, are used to act on at least part of the connection device, in particular on at least part of a surface of the connection device, whereby the security element is produced. To this end it is furthermore preferred that the connection device is placed on an anvil as it is known in the art as well, and wherein the sonotrode is pressed onto the connection device on a side being opposite the anvil. That is, it is preferred that a bottom surface of the connection device lies on the anvil and that the sonotrode is pressed against an opposing top surface of the connection device.

Ultrasonic welding enables an industrial method to mark connection devices commonly made of polymers and/or plastics such as polyester fabric (or other similar material) in a fast and efficient way, creating even very small details. The production of security elements in synthetic fabrics with high melting points are usually very difficult to make. The thus produced security elements are irreversible and thus provide high security. Moreover, the ultrasonic welding does not harm the properties of the connection device. In fact, ultrasonic welding does not require high temperatures, which are a necessity in heat moulding of polyester fabrics, for instance. Therefore, the material of the connection device remains usable despite of its treatment. Furthermore, ultrasonic welding is a widely used industrial technology and an economical method to mould material, because there is no similar energy loss than in hot stamping methods. Besides, ultrasonic welding allows the production of detailed security elements in the connection device. The technique is fast and can be used in various process phases.

The security element preferably comprises or consists of at least one embossing and/or at least one debossing and/or at least one deformation and/or at least one melted area.

An embossing is understood as an element comprising protrusions and/or recesses, which extend away from a surface of the connection element. In other words, the security element in the form of the embossing preferably has a raised appearance. Said embossing is preferably produced in the top surface of the connection device by the anvil pressing against the bottom surface of the connection device. A debossing is understood as an element comprising protrusions and/or recesses, which extend into a surface of the connection element. In other words, the security element in the form of a debossing preferably has a sunken appearance. The debossing is preferably produced in the top surface of the connection device by the sonotrode pressing against the top surface of the connection device. Again in other words, the security element, in particular at least one of its surfaces, preferably comprises a relief structure. Hence, the security element is preferably provided in a surface of the connection device.

Moreover, depending on an energy level at which the ultrasonic welding is performed and/or the tooling of the ultrasonic welding device, one or more melted areas and/or one or more deformations are generated in the connection device, whereby the security element is formed as well. That is, the ultrasonic welding can melt or deform a material of the connection device. In fact, by «deformation» it is meant that at least part of the connection device is locally deformed by losing its normal shape and/or width. Furthermore, it should be noted that a deformation and/or the generation of a melted area is possible without embossing or debossing.

Additionally, it should be noted that the melted area in the connection device is in the solid state. In addition, it is preferred that the one or more melted areas and/or the one or more deformations are produced with an even surface.

The connection device preferably further comprises at least one additional security element being produced by ultrasonic welding. The additional security element preferably is provided on and/or in the security element. It is particularly preferred that the additional security element is provided on and/or in the melted area and/or the deformation of the security element. In fact, it is preferred that the additional security element is provided on and/or in a surface of the melted area or the deformation of the security element.

In the event that an additional security element is produced, it is preferred that the sonotrode and/or the anvil comprises an additional structure to be embossed or debossed into the connection device, in particular into the security element being generated in the connection device.

The additional security element preferably comprises at least one embossing and/or at least one debossing and/or at least one melted area and/or at least one deformation. Generally speaking, the additional security element can be seen as a security element in the security element.

The security element and/or the additional security element preferably have the shape of an image and/or of an alphanumeric character. Non-exhaustive examples of an image are a state coat of arms, a state flag, geometric objects such as lines, circles, etc. Non-exhaustive examples of an alphanumeric character are a date of birth, a name, a social security number e.g. of the holder of the secure article, an expiry date, etc.

The security element and the additional security element can be the same or different from one another. For instance, the security element as well as the additional security element could both be a state coat of arms. Or, as another example, the security element could be a state coat of arms and the additional security element could be a text, etc.

A size of the additional security element is preferably smaller than a size of the security element. For instance, the additional security element could be a microtext that is provided within the security element in the form of the state coat of arms. To this end, and as already mentioned, it is preferred that the additional security element is provided as an embossing and/or debossing on a surface of the security element by ultrasonic welding, and which surface preferably corresponds to one or more melted areas of the security elements that are generated by ultrasonic welding as well.

Moreover, the security element and/or the additional security element are preferably visible in sidelight and/or in see-through light and/or in normal light. Being visible in sidelight means, that the security element and/or the additional security element is recognizable by an observer upon an illumination of the connection device from a side of the connection device, i.e. in reflective light or side light. Being visible in see-through light means that the security element and/or the additional security element is recognizable by an observer upon an illumination of the connection device from a side being opposed to the security element and/or the additional security element, i.e. in transmissive light. For instance, if the (additional) security element is provided on a top surface of the connection device, an illumination of an opposing bottom surface of the connection device would make the (additional) security element recognizable. Being visible in normal light means that the security element and/or the additional security element is recognizable by an observer upon an illumination of the connection device from that side the (additional) security element is arranged on. For instance, if the (additional) security element is arranged on a top surface of the connection device, an illumination of said top surface of the connection device would make the (additional) security element recognizable. To this end it is preferred that the (additional) security element is configured such, that its visibility in sidelight and/or in see-through light is better than in normal light. In other words, it is preferred that the (additional) security element is configured such, that is it slightly visible in normal light but clearly visible in sidelight and/or in see-through light.

The security element preferably is an integral component of the connection device. Moreover, the additional security element preferably is an integral component of the security element and/or of the connection device.

In other words, the security element is preferably formed in the connection device itself. Again in other words, the security element is preferably not a separate component that is e.g. added to the connection device such as printed onto the connection device. Consequently, it is preferred that the security element comprises or consists of one or more materials the connection device is made of.

As mentioned earlier, the security element is preferably produced by ultrasonic welding. The additional security element is preferably produced by ultrasonic welding as well. Hence, the security element and possibly also the additional security element can be seen as a structural modification of the connection element with an ultrasonic welding treatment.

The connection device preferably comprises or consists of at least one or more polymers and/or one or more plastics and/or one or more fabrics preferably comprising fibres and/or one or more layers. Additionally or alternatively the connection device preferably is bendable and/or flexible.

The one or more polymers and/or one or more plastics preferably are thermoplastics and/or amorphous polymers, particularly preferably polyester and/or polyester-based polymers and/or polyolefin-based polymers and/or thermoplastic elastomers.

As mentioned earlier, the security element preferably is an integral component of the connection device. As such, it is preferred that the security element comprises or consists of one or more polymers and/or plastics, preferably one or more thermoplastics and/or amorphous polymers, particularly preferably polyester and/or polyester-based polymers and/or polyolefin-based polymers and/or thermoplastic elastomers as mentioned above and as explained further below.

The connection device can be transparent or translucent or opaque. A transparent connection device preferably comprises one or more transparent polymers and/or plastics.

The one or more fibers preferably are one or more threads and/or one or more yarns.

The connection device can comprise or consist of a fabric preferably comprising fibres of one or more polymers and/or plastics. Additionally or alternatively the connection device can comprise one or more layers. A layer is understood as an intact element as opposed to a fabric being composed of threads and including holes or openings, for instance. For instance, the connection device can be provided by a fabric and additionally also by one or more sheets, and wherein the fabric as well as the sheets are provided in the form of layers.

The connection device can be of various designs. For instance, the connection device can be provided in the form of a fabric such as a non-woven fabric or woven fabric or a knitted fabric. It is furthermore preferred that said fabric is provided by one or more fibres. The fibres in turn preferably correspond to one or more polymers and/or one or more plastics as mentioned above. That is, it is preferred that the connection device corresponds to a fabric being formed by polymer fibres and/or plastics fibres, preferably being formed by fibres of one or more thermoplastics, particularly preferably being formed by fibres of polyester and/or polypropylene and/or polyurethane and/or polyester-based polymer and/or polypropylene-based polymer and/or polyurethane-based polymer. The fibres can be monofilaments or multifilaments. A diameter of the fibre preferably is between 1 micrometer to 500 micrometer, more preferably between 10 micrometer to 100 micrometer such as between 70 and 80 micrometer. It is furthermore preferred that the connection device in the form of the fabric comprises openings, i.e. mesh openings. A size of a mesh opening preferably is between 10 micrometer to 1000 micrometer, more preferably between 50 micrometer to 500 micrometer, and particularly preferably about 100 micrometer. Moreover, a mesh cut of the connection device in the form of the fabric preferably is between 10 threads per centimetre to 100 threads per centimetre, such as between 50 threads per centimetre to 60 threads per centimetre, for instance 57 threads per centimetre.

In addition or alternatively, the connection device can comprise one or more layers. Said one or more layers preferably correspond to layers of one or more polymers and/or one or more plastics, preferably of one or more layers of thermoplastics, particularly preferably to one or more layers of polyester and/or polyester-based polymers and/or polyolefin-based polymers and/or thermoplastic elastomers as mentioned above.

Two or more layers of the connection device are preferably connected to one another by lamination. However, manufacturing methods other than lamination are likewise conceivable.

Furthermore, it should be noted that the connection device can comprise one or more layers being different from the ones as just described. For instance, metallic layers, coloured layers, etc., as they are known in the field of the art could also be present.

In a further aspect, a data carrier for a secure article, preferably a multi-page article such as a passport, a bank book, a cheque book, a ticket book or an identification booklet, is provided. The data carrier comprises at least one connection device as described above and at least one data device, wherein the connection device is in connection with the data device. The connection device particularly preferably is a hinge and/or the data device particularly preferably is a data page.

Any explanations made herein regarding the connection device per se likewise apply to the data carrier comprising said connection device and vice versa.

The security element preferably is provided in the connection device only. In other words, the data device preferably lacks the security element. Additionally or alternatively it is conceivable that at least part of the security element and/or the additional security element is situated on and/or in the data device. In fact, and as will be explained in greater detail below, at least part of the connection device can be arranged on and/or in the data device. Said part of the connection device may be called overlapping area of the connection device as it overlaps with the data device. On the contrary, the part of the connection device which does not overlap with the data device may be called protruding area of the connection device as it extends from the data device. Advantageously, the security element is provided at least in the protruding area of the connection device. If said overlapping area of the connection device comprises at least part of the security element, said part of the security element will be situated on and/or in the data device. For instance, at least part of the security element could be situated within the data device in the event that at least part of the connection device is laminated inside the data device. It is also conceivable that the entire security element is situated within the data device or that the security element is not situated within the data device at all. Said "situation" refers to a spatial arrangement. To this end it is preferred that neither the data device nor the secure article comprise the security element and/or the additional security element, i.e. the one or more materials constituting the data device and/or the secure article preferably lack the security element and/or the additional security element.

The data device preferably comprises or consists of one or more polymers and/or plastics, preferably one or more thermoplastics and/or amorphous polymers, particularly preferably polycarbonate and/or polycarbonate blends and/or polycarbonate co-extrudates. Additionally or alternatively the data device preferably comprises one or more layers and/or is configured rigidly.

The connection device and the data device preferably are of different materials. In fact, it is particularly preferred that the connection device comprises or consists of polyester and/or polyester-based polymers, and that the data device comprises or consist of polycarbonate and/or polycarbonate blends and/or polycarbonate co-extrudates.

The data device can be transparent or translucent. A transparent data device preferably comprises one or more transparent polymers and/or plastics.

The data carrier preferably comprises one or more layers and/or is configured rigidly.

In addition, it is conceivable that the data device comprises one or more layers. Said one or more layers preferably correspond to layers of one or more polymers and/or one or more plastics, preferably of one or more layers of thermoplastics and/or amorphous polymers, particularly preferably polycarbonate and/or polycarbonate blends and/or polycarbonate co-extrudates as mentioned above.

Two or more layers of the data device are preferably connected to one another by lamination.

The connection device is preferably at least partially embedded in the data device. In this configuration, the part of the connection device referred to as overlapping area is inside the data device. This arrangement is particularly advantageous as the overlapping area of the connection device, which is embedded in the data device, will not be visible at the surface of said data device. The appearance of the surface of the data device is therefore improved. In addition, as the extremity of the portion of the connection device embedded in the data device is not visible, it will be more difficult for a forger to separate the connection device from the data device. Furthermore, this configuration allows using different techniques for producing the security element and for the connection of the connection device to the data device. In particular, it is possible to use ultrasonic welding for producing the security element on the connection device and to use lamination for connecting the connection device to the data device. Moreover, this configuration also allows to add extra security features to the data device in the area of the data device which overlaps the connection device. For example, a surface embossing of the data device in said area can be produced by lamination during the lamination process.

As mentioned earlier, the connection device and the data device preferably comprise or consist of one or more polymers and/or plastics. The data device furthermore preferably comprises one or more layers. A preferred connection of the connection device with the data device can be achieved by laminating at least part of the connection device between the layers of the data device. Again another conceivable connection is a lamination of at least part of the connection device onto a surface of the data device, in particular onto a surface of a layer of the data device. Other connections are however likewise conceivable. For instance, the connection device can be sewed or glued or otherwise attached, e.g. by ultrasonic welding or lamination, to the data device.

Furthermore, it should be noted that the data device can comprise one or more layers being different from the ones as just described. For instance, metallic layers, coloured layers, etc., as they are known in the field of the art could also be present.

It is in any case preferred that only part of the connection device is connected to the data device, wherein another part of the connection device is not connected to the data device. Said unconnected part, or at least part of it, preferably serves the purpose of connecting the connection device, and thereby the data device, to a secure article such as a passport, e.g. to covers of the passport. To this end it is preferred that the unconnected part of the connection device protrudes from the data device. Said unconnected part of the connection device may be referred to as protruding area. Advantageously, the security element is provided at least in the protruding area of the connection device.

Depending on the data device, the connection device in the region of its connection to the data device can be visible or invisible to an observer. For instance, if the data device is transparent, for example because it consists of transparent layers of thermoplastics, a connection device being embedded between the layers or attached to one of these layers would be visible. However, if the data device at least in the region of its connection to the connection device is non-transparent, an embedded connection device would not be visible for an observer. A non-transparent data device could be provided by coloured layers of polymers and/or plastics such as white polycarbonate, for instance.

In another aspect a secure article comprising or consisting of at least one data carrier as described above is provided. The secure article preferably is a multi-page article such as a passport, a bank book, a cheque book, a ticket book or an identification booklet. Any explanations made herein regarding the connection device per se, the data carrier per se likewise apply to the secure article and vice versa.

In another aspect, a method of producing a connection device for connection to a data device and for connecting the data device to a secure article is provided. The method comprising the steps of i) providing at least one connection device, and ii) producing at least one security element in the connection device by ultrasonic welding.

The connection device preferably is the connection device as described above. Hence, any explanations made herein regarding the connection device per se likewise apply to the method of producing the connection device and vice versa.

The ultrasonic welding is preferably performed using an ultrasonic welding device as it is known in the art. Hence, the method preferably further comprises the step of providing at least one ultrasonic welding device. Said ultrasonic welding device preferably comprises a sonotrode and/or an anvil. It is furthermore preferred that the sonotrode and/or the anvil comprises a structure to be embossed and/or debossed into the connection device, whereby the security element is generated.

Hence, the method preferably further comprises the step of providing at least one sonotrode comprising at least one structure to be embossed and/or debossed into the connection device, whereby the security element is generated, and/or further comprises the step of providing at least one anvil comprising at least one structure to be embossed and/or debossed into the connection device, whereby the security element is generated.

It is further preferred that, during the step of producing at least one security element in the connection device by ultrasonic welding, the connection device is in abutment and/or in direct contact with both the sonotrode and the anvil. In that way, there is no need for any other material than the connection device for producing at least one security element in the connection device by ultrasonic welding. This means that the step of producing of at least one security element in the connection device can be performed on the connection device alone, without need of the data device, and that said connection device comprising the at least one security element can be attached in and/or on the data device later on in a subsequent step.

It is preferred to use a commercially available ultrasonic welding device, wherein it is furthermore preferred that said ultrasonic welding device is operated with standard settings. In fact, the security element is preferably produced by applying vibrations. A frequency of the vibrations preferably is in the range of 1 kHz to 100 kHz, more preferably in the range of 20 kHz to 70 kHz. Additionally or alternatively, an amplitude of the vibrations preferably is in the range of 1 micrometer to 100 micrometer, more preferably in the range of 50 micrometer to 50 micrometer. A welding time preferably is in the range of 0.05 second to 1 second, more preferably in the range of 0.1 second to 0.5 second.

The method preferably further comprises the step of generating at least one additional security element by ultrasonic welding. The additional security element preferably is generated on and/or in the security element as has already been explained above. The settings of the ultrasonic welding device used to produce the additional security element preferably correspond to the settings being used to produce the security element. Moreover, the security element and the additional security element are preferably generated simultaneously and/or with a common sonotrode and/or a common anvil.

In a further aspect a method of producing a data carrier for a secure article such as a multi-page article is provided, wherein the method comprises the steps of i) providing at least one connection device, ii) providing at least one data device, and iii) producing at least one security element in the connection device by ultrasonic welding.

The data carrier preferably corresponds to the data carrier as described above. Any explanations made herein regarding the connection device per se, the data carrier per se, and the secure article per se likewise apply to the method of producing the connection device and/or the data carrier and/or the secure article and vice versa.

The method preferably further comprises the step of connecting the connection device with the data device, wherein the security element is generated in the connection device before or after the connection device is connected to the data device.

In the event that an additional security element is generated, it is preferred that said additional security element is generated before and/or after the connection device is connected to the data device as well.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a photograph of a connection device comprising a security element according to the invention;
- Fig. 1b: shows a magnification of a part of the security element according to figure 1a;
- Fig. 1c: shows another magnification of a part of the security element according to figure 1a;
- Fig. 2a: shows a schematic top view on a connection device comprising a security element according to the invention;
- Fig. 2b: shows another schematic top view on a connection device comprising a security element according to the invention;
- Fig. 2c: shows another schematic top view on a connection device comprising a security element according to the invention;
- Fig. 3: shows a schematic top view on a data carrier comprising a data device and a connection device that comprises a security element according to the invention;
- Fig. 4: shows another schematic top view on a data carrier comprising a data device and connection device that comprises a security element according to the invention;
- Fig. 5: shows a schematic partial top view on a connection device comprising a security element and an additional security element.

### DESCRIPTION OF PREFERRED EMBODIMENTS

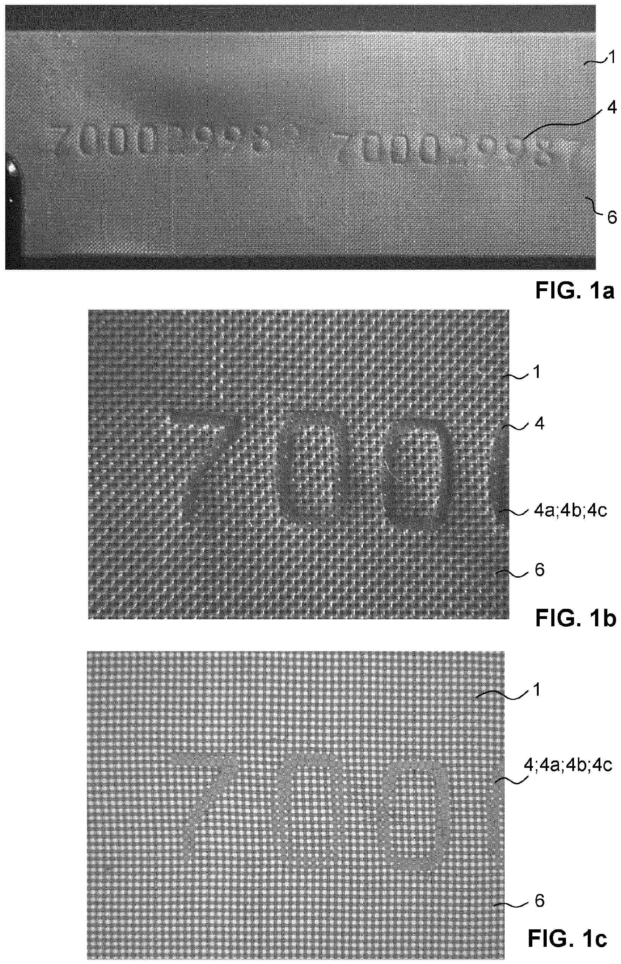

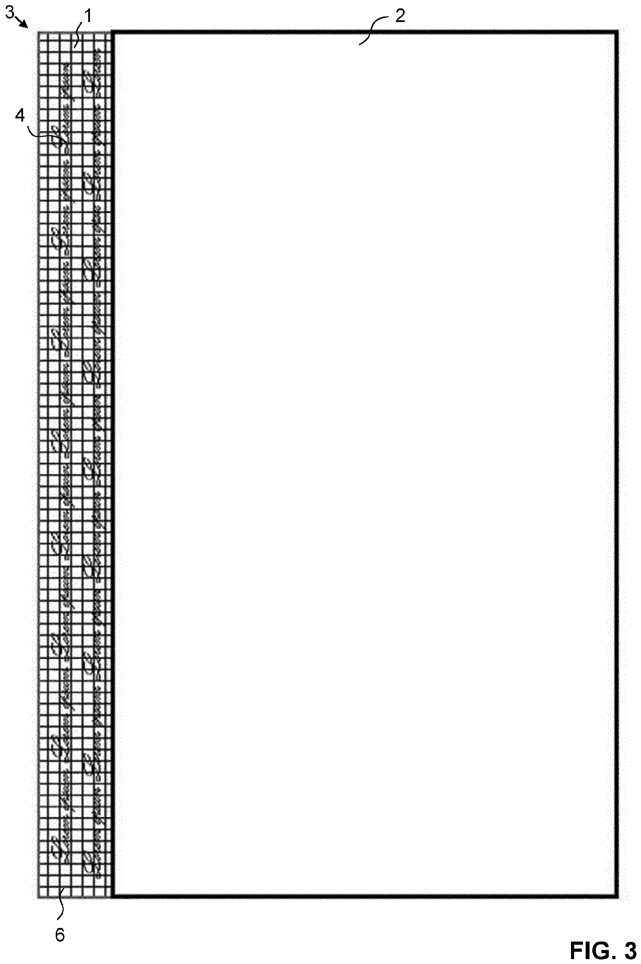

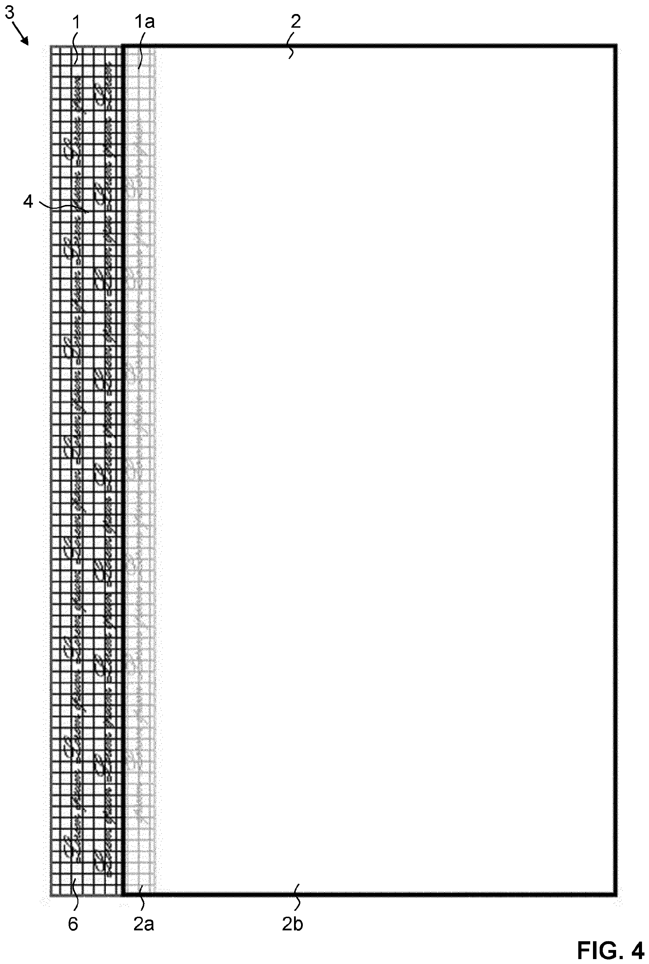

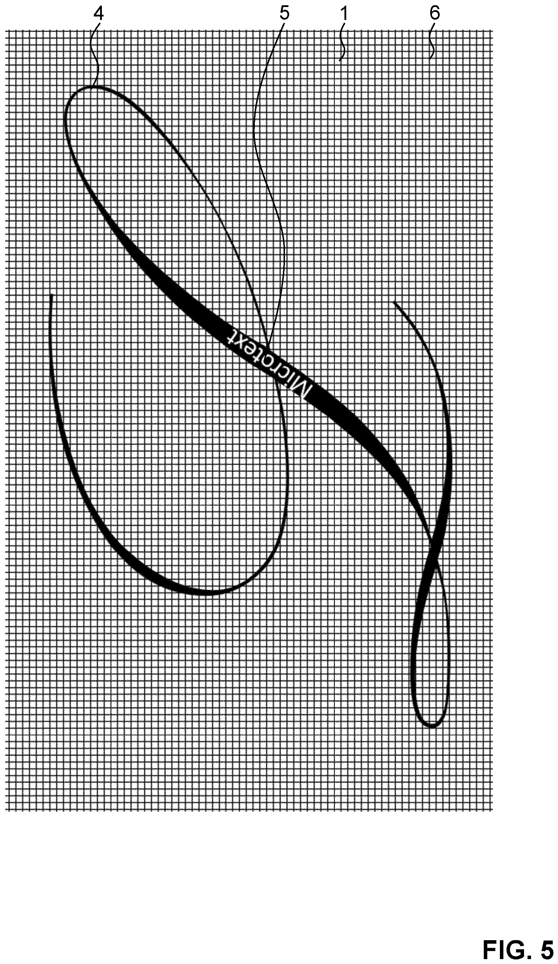

Aspects of the invention shall now be described with reference to the figures. In particular, figures 1a to 2c depict connection devices 1 in the form of a hinge that comprise security elements 4 according to the invention. Figures 3 and 4 depict a data carrier 3 comprising a data device 2 in the form of a data page being connected to a connection device 1 in the form of a hinge, wherein the hinge comprises security elements 4 according to the invention. Figure 5 depicts a part of a connection device 1 in the form of a hinge comprising a security element 4 and an additional security element 5 according to the invention.

The connection device 1 of all figures corresponds to a flexible and bendable hinge in the form of a fabric. The fabric in turn is composed of woven yarns being made of polyester. Moreover, the security elements 4 and the additional security elements 5 are in each case produced in the hinge by means of ultrasonic welding.

To this end figures 1a to 1c depict photographs of the polyester fabric hinge, wherein the security element 4 being produced by ultrasonic welding corresponds to a debossing 4a being generated in a top surface 6 of the hinge 1. As furthermore follows from these figures, the debossing 4a comprises protrusions extending into the surface 6 of the connection element 1 such that it has a raised appearance. Here, said debossing 4a has the shape of an alphanumeric character "700029989" etc. As readily follows from these photographs, the hinge 1 does not lose its processing properties despite of the security element 4. The strength of the hinge is not reduced at the level of the security element 4 such that said security element 4 does not constitute a breaking point for the hinge. As best seen in figure 1c, the security element 4, 4a in the form of the debossed alphanumeric character also comprises areas 4b, 4c that are flattened and, to some extent, melted together. In fact, the polyester yarns have flattened and, to some extent, are melted together. These areas are called herein melted areas 4c and deformations 4b.

As will be readily understood, the security element 4 according to the invention corresponds to an irreversible change of the material of the connection element. In fact, the ultrasonic welding device being used to generate the security elements 4 and the additional security elements 5 allows the creation of local energy clusters by ultrasound. With pressure, the vibration created by ultrasound is capable of modifying the shape of the treated material permanently. Each material has its specific way to react for ultrasound. In the present invention, the web-like hinge material is remoulded to produce visually distinctive, smooth areas 4b, 4c. Smooth areas 4b, 4c can contain very small details depending on the tooling being used in the ultrasonic welding device, i.e. on the sonotrode and/or the anvil. Moreover, the tooling affects the visual appearance of the security element 4 and the additional security element 5 such as the production of smooth areas, height, etc. Moreover, and as also follows from these photographs, the security elements 4 are visible by bare eyes. However, depending on a size of the security element 4 and the additional security element 5, a visualization aid such as a loupe or a microscope might be necessary to see them.

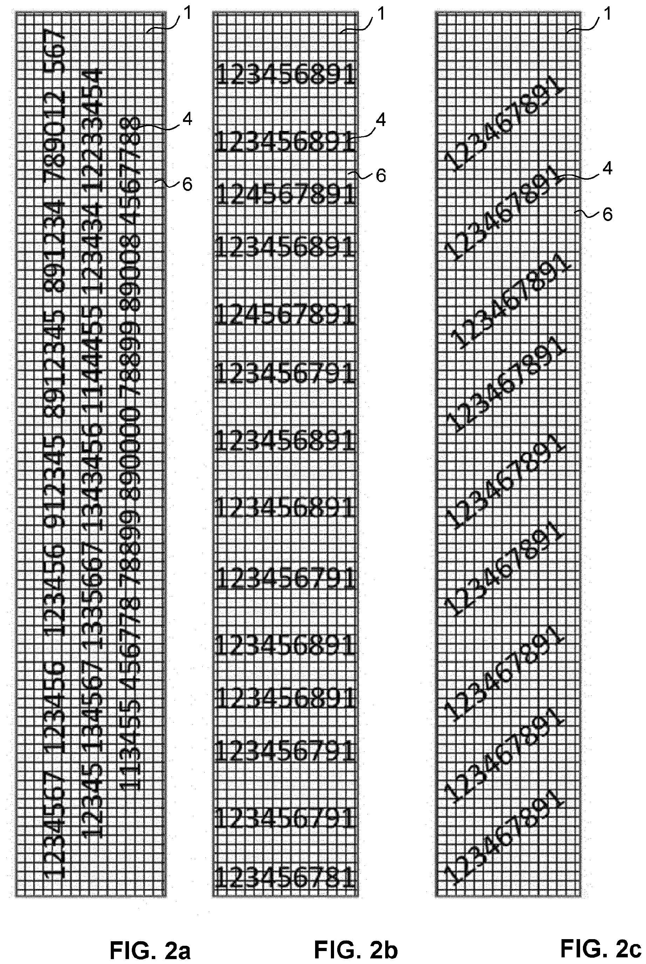

Figures 2a to 2c shall illustrate that the security elements 4 can be produced in various designs. In fact, these figures depict different directions of the security elements 4 with respect to the connection device 1, wherein figure 2a depicts a horizontal arrangement of the security elements 4, figure 2b depicts a vertical arrangement of the security elements 4, and figure 2c depicts a diagonal arrangement of the security elements 4, respectively.

Various arrangements of the connection device 1 in the data carrier 3 as well as various designs of the data carrier 3 are conceivable as well. For instance, figure 3 depicts a data carrier 3 comprising a data device 2 in the form of a data page and a connection device 1 in the form of a hinge, wherein the data page corresponds to a plastic data page being made of polycarbonate and being non-transparent. The hinge 1 is partially embedded within the data page 2. In other words, a part of the hinge 1 is inside of the data page 2 and hence not visible.

Figure 4 depicts also a data carrier 3 comprising a data device 2 in the form of a data page and a connection device 1 in the form of a hinge. Here, the data page 2 comprises a part 2b being made of non-transparent plastic such as non-transparent polycarbonate but also comprises a part 2a being a transparent window and being made of a transparent plastic. As such, the part 1a of the hinge 1, also referred to as overlapping area of the connection device, being embedded in the data page 1 and in the region of the transparent window 2a can be seen.

Figure 5 depicts a part of the connection device 1 in the form of the fabric hinge with comprises a security element 4 in the form of the letter "L" as well as an additional security element 5 in the form of the character "microtext" being arranged entirely on the letter "L". As readily follows from this figure, a size of the additional security element 5 is much smaller than a size of the security element 4.

Thus, from the figures it readily follows that the security elements 4 and additional security elements 5 are produced in the material of the hinge only. Furthermore, since the ultrasonic welding does not require any heat but merely produces heat locally to the welded point, the hinge material remains unharmed for other process phases. Nevertheless, the ultrasonic welding results in security elements 4 and additional security elements 5 being permanent and furthermore enables practically any shape of security elements 4 and additional security elements 5 such as image, letter, number, etc.

### LIST OF REFERENCE SIGNS

| | | | |
|---|---|---|---|
| 1 | connection device | 4 | security element |
| 1a | part of connection device | 4a | debossing |
| 2 | data device | 4b | deformation |
| 2a | part of data device | 4c | melted area |
| 2b | part of data device | 5 | additional security element |
| 3 | data carrier | 6 | surface |

## Claims

1. A connection device (1) for connection to a data device (2) and for connecting the data device (2) to a secure article,
wherein the connection device (1) comprises at least one security element (4),
**characterized in that** the security element (4) is produced by ultrasonic welding.

2. The connection device (1) according to claim 1, wherein the security element (4) comprises or consists of at least one embossing and/or at least one debossing (4a) and/or at least one deformation (4b) and/or at least one melted area (4c).

3. The connection device (1) according to any one of the preceding claims, further comprising at least one additional security element (5) being produced by ultrasonic welding, wherein the additional security element (5) is provided on and/or in the security element (4), and
wherein the additional security element (5) preferably is provided on and/or in the melted area and/or the deformation of the security element (4).

4. The connection device (1) according to any one of the preceding claims, wherein the security element (4) is an integral component of the connection device (1), and
wherein the additional security element (5) preferably is an integral component of the security element (4) and/or of the connection device (1).

5. The connection device (1) according to any one of the preceding claims, wherein the connection device (1) comprises or consists of at least one of: one or more polymers, one or more plastics, one or more fabrics preferably comprising fibres, and one or more layers, and/or
wherein the connection device (1) is bendable and/or flexible.

6. A data carrier (3) for a secure article, preferably a multi-page article such as a passport, a bank book, a cheque book, a ticket book or an identification booklet, wherein the data carrier (3) comprises:
- at least one connection device (1) as claimed in any one of the preceding claims, and
- at least one data device (2),
wherein the connection device (1) is in connection with the data device (2).

7. The data carrier (3) according to claim 6, wherein the connection device (1) is at least partially embedded in the data device (2).

8. The data carrier (3) according to claim 6 or 7, wherein the security element (4) is provided in the connection device (1) only, and/or
wherein at least part of the security element (4) and/or the additional security element (5) is situated on and/or in the data device (2).

9. The data carrier (3) according to any claim 6 to 8, wherein the data device (2) comprises or consists of one or more polymers and/or plastics, preferably one or more thermoplastics and/or amorphous polymers, particularly preferably polycarbonate and/or polycarbonate blends and/or polycarbonate co-extrudates, and/or
wherein the data device (2) comprises one or more layers and/or is configured rigidly.

10. A secure article comprising or consisting of at least one data carrier (3) as claimed in any one of claims 6 to 9, the secure article preferably being a multi-page article such as a passport, a bank book, a cheque book, a ticket book or an identification booklet.

11. A method of producing a connection device (1) for connection to a data device (2) and for connecting the data device (2) to a secure article, the connection device (1) preferably being a connection device (1) as claimed in any one of claims 1 to 5, and the method comprising the step of:
- Providing at least one connection device (1), and
- Producing at least one security element (4) in the connection device (1) by ultrasonic welding.

12. The method according to claim 11, further comprising the step of providing at least one sonotrode comprising at least one structure to be embossed and/or debossed into the connection device (1), whereby the security element (4) is generated, and/or
further comprising the step of providing at least one anvil comprising at least one structure to be embossed and/or debossed into the connection device (1), whereby the security element (4) is generated.

13. The method according to claim 11 or 12, wherein the security element (4) is produced by applying vibrations having a frequency in the range of 1 kHz to 100 kHz, preferably in the range of 20 kHz to 70 kHz, and/or
wherein the security element (4) is produced by applying vibrations having an amplitude in the range of 1 micrometer to 100 micrometer, preferably in the range of 5 micrometer to 50 micrometer, and/or
wherein the security element (4) is produced during a welding time in the range of 0.05 second to 1 second, preferably in the range of 0.1 second to 0.5 second.

14. The method according to any one of claims 11 to 13, further comprising the step of producing at least one additional security element (5) by ultrasonic welding,
wherein the additional security element (5) is generated on and/or in the security element (4), and
wherein the security element (4) and the additional security element (5) are preferably generated simultaneously and/or with a common sonotrode and/or anvil.

15. A method of producing a data carrier (3) for a secure article such as a multi-page article, the data carrier (3) preferably corresponds to the data carrier (3) as claimed in any one of claims 6 to 9, wherein the method comprises the steps of:
- Providing at least one connection device (1);
- Producing at least one security element (4) in the connection device (1) by ultrasonic welding; and
- Providing at least one data device (2);
the security element (4) being generated in the connection device (1) before the connection device (1) is connected to the data device (2).
